# EUROPEAN PATENT SPECIFICATION

(11) **EP 4 300 937 B1**
(45) Date of publication and mention of the grant of the patent: **11.06.2025**
(21) Application number: 22181930.3
(22) Date of filing: 29.06.2022
(51) Int. Cl.: H04N 5/262, H04N 23/00

(54) **MULTI-IMAGE CAPTURE AND STORAGE**
MEHRBILDERFASSUNG UND -SPEICHERUNG
CAPTURE ET STOCKAGE D'IMAGES MULTIPLES

(43) Date of publication of application: 03.01.2024
(73) Proprietor: Vestel Elektronik Sanayi ve Ticaret A.S., 45030 Manisa (TR)
(72) Inventor: CUBUKCU, Baran, 45030 Manisa (TR)
(74) Representative: Page White Farrer

(56) References cited:
- WO-A1-2018/164932
- WO-A1-2019/036124
- WO-A1-2021/175269

## Description

### Technical Field

The present disclosure relates to a method, electronic device, and computer program for capturing and storing images using a plurality of cameras.

### Background

Modern electronic devices, such as smartphones, comprise two or more cameras. The cameras may have different hardware capabilities (e.g., different resolutions, different lens speeds, etc.) and/or different software settings (e.g., different shutter speeds, different ISO settings, etc.) suitable for different scenarios. The user of such a device therefore has a choice of different cameras, and can specify which camera to use when capturing an image of a scene.

WO2019/036124A1 discloses storing a first image of a scene captured by a first camera, storing a second image of the scene captured by a second camera, and storing a first user-composed image.

### Summary

The invention is defined in the independent claims, while advantageous embodiments are set out in the dependent claims.

According to a first aspect disclosed herein, there is provided a method carried out by an electronic device which comprises a plurality of cameras, the method comprising:
receiving, at the electronic device, a user command to capture an image using a selected one of the plurality of cameras;
in response to receiving said user command, capturing a first image using the selected camera and capturing at least one second image using at least one other, non-selected, camera;
storing the first image to a data storage internal to the electronic device; and
sending the at least one second image to a data storage external of the electronic device for storage at said external data storage.

The images captured by the different cameras may be substantially similar, but differ due to, for example, one or more different hardware or software settings of the cameras at the time the images are captured. The user may not know at the time which camera is best suited to capture the image. To address this, even though the user selected only one camera, examples described herein take at least one second image with one or more of the other cameras and store a "backup" of the other images, for at least a period of time, so that the user can access them should it turn out that they are required. By saving the at least one second image to the external storage, rather than the internal storage, storage space on the electronic device is saved.

The selected one of the plurality of cameras may be specified explicitly by the user command, i.e. the user command may include an indication of which camera to use. Alternatively, the selected one of the plurality of cameras may be specified implicitly, e.g. the selected camera may be a default camera, or a most recently-used camera.

**In** an example, the method may comprise causing metadata associating the first image with the at least one second image to be stored. The metadata may be stored at the electronic device, e.g. in the internal storage. An advantage of this is that the electronic device itself can locally determine that there is at least one second image associated with the first image in the internal storage. However, it is not excluded that the metadata is stored elsewhere, e.g. the external storage or another storage.

Alternatively or additionally, image recognition may be used to identify that a second image corresponds to the first image, in which case no metadata may be required.

In an example, the method comprises: receiving user input relating to the first image; and in response to receiving said user input relating to the first image, outputting an indication to the user that the at least one second image is available.

The user input may comprise one or more of: a zoom-in action on the first image; a crop action on the first image; a zoom-out action on the first image; an instruction to adjust a value of a setting of the first image; and an instruction to use the first image in an application. In other words, if the user performs any action on or with the first image, the electronic device may inform the user that there are other versions of the first image available which the user may wish to consider.

In an example, the method comprises: receiving user input relating to the first image; identifying an image property based on the user input relating to the first image; determining a second image of the at least one second images stored in the external storage having an improved value for the identified image property relative to the first image; and outputting a notification to the user that the determined second image is available. In other words, rather than simply informing the user that there are other versions of the first image available, the electronic device may actively suggest one to the user.

In an example, said user input comprises one or more of a zoom-in action on the first image and a crop action on the first image, said identified image property being one or more of an image resolution and an image sharpness; and wherein the second image is determined based on the second image having one or more of: a higher resolution than the first image; and a greater sharpness than the first image.

In an example, the method comprises identifying a portion of the first image based on the zoom-in or crop action, said identified image property being one or more of an image resolution within said portion and an image sharpness within said portion; and the second image is determined based on the second image having one or more of: a higher resolution in a portion of the second image corresponding to the identified portion of the first image and a greater sharpness in the portion of the second image corresponding to the identified portion of the first image.

In an example, said user input comprises a zoom-out action on the first image, said identified image property being a field of view; and wherein the second image is determined based on the second image having a wider field of view than the first image.

In an example, said user input comprises an instruction to use the first image in an application having a predefined image requirement, said identified image property being the predefined image requirement; and wherein the second image is determined based on the second image meeting said predefined image requirement.

In an example, the method comprises: obtaining one or more of said second images from the external storage; receiving user input selecting one of said second images; and storing the selected second image in the internal storage.

In an example, the method comprises deleting the first image from the internal storage. This may be done e.g. in response to receiving the user selection, or in response to storing the second image.

In an example, the method comprises automatically deleting the at least one second image from the external storage a predetermined amount of time after the at least one second image was stored to the external storage. The predetermined amount of time may be configurable by the user and may be, e.g. an hour, a day, a week, a month, etc.

In an example, the method comprises:
identifying whether user input relating to the first image has been received at the electronic device during a predetermined period of time since the at least one second image was stored to the external storage; and
in response to identifying that no user input relating to the first image has been received at the electronic device during said predetermined period of time, causing the at least one second image to be deleted from the external storage.

The predetermined period of time may be configurable by the user and may be, e.g. an hour, a day, a week, a month, etc. Generally, the predetermined period of time may be shorter than the predetermined amount of time.

In an example, the user command specifies at least one setting for the selected camera for use in capturing the first image; and wherein the method comprises:
applying the at least one setting to the selected camera for use in capturing the first image; and
applying the same or substantially the same setting to the at least one other, non-selected, camera for use in capturing the at least one second image.

For example, the user could specify to capture a black and white image with the selected camera, and the electronic device will also capture black and white images with the other cameras.

According to a second aspect disclosed herein, there is provided an electronic device comprising:
an internal data storage;
a plurality of cameras;
a user interface for receiving a user command to capture an image using a selected one of the plurality of cameras;
a controller configured to:
   in response to receiving said user command via the user interface, cause the selected camera to capture a first image and cause at least one other, non-selected, camera to capture at least one second image;
   store the first image to the internal storage; and
   send the at least one second image to a data storage external of the electronic device for storage at said external storage.

The cameras may have a substantially corresponding field of view. That is, at any given moment in time, the respective images captured by the cameras may be similar. This may be the case, for example, if the cameras are mounted within the electronic device e.g. next to each other, pointing in same direction.

In an example, the controller is configured to store metadata associating the first image with the at least one second image.

In an example, the plurality of cameras each have at least one different hardware property selected from: sensor resolution, maximum aperture, and minimum focus distance.

In an example, the plurality of cameras have at least one different setting at the time of receipt of the user command selected from: shutter speed, f-stop, ISO, focal length, image format, saturation, contrast, gamma, supported colour space, picture enhancement capabilities (e.g. HDR), exposure time, and flash availability (i.e. whether or not flash was used when capturing the image).

In accordance with a third aspect disclosed herein, there is provided a computer program comprising instructions configured so as when executed by one or more processing units to perform the method of the first aspect or any example thereof.

### Brief Description of the Drawings

To assist understanding of the present disclosure and to show how embodiments may be put into effect, reference is made by way of example to the accompanying drawings in which:
Figure 1 shows schematically an example of an electronic device in accordance with examples described herein;
Figure 2 shows a flow chart of an example of a first method performed by a controller of the electronic device;
Figure 3 shows a flow chart of an example of a second method performed by the controller of the electronic device; and
Figures 4a and 4b show schematically examples of a user interacting with images on a user interface of the electronic device.

### Detailed Description

Electronic devices comprising a plurality of cameras provide the user with a greater choice when it comes to capturing an image of a scene. However, it can be difficult for a non-expert user to know, at the time of image capture, which is the best choice of camera for that particular scene. Even an expert user may be in a hurry and not have time to select the ideal camera. Moreover, it may turn out at a later point in time that it would have been preferable to use a different one of the cameras than the one which with which the image was captured. Examples described herein address these and other problems.

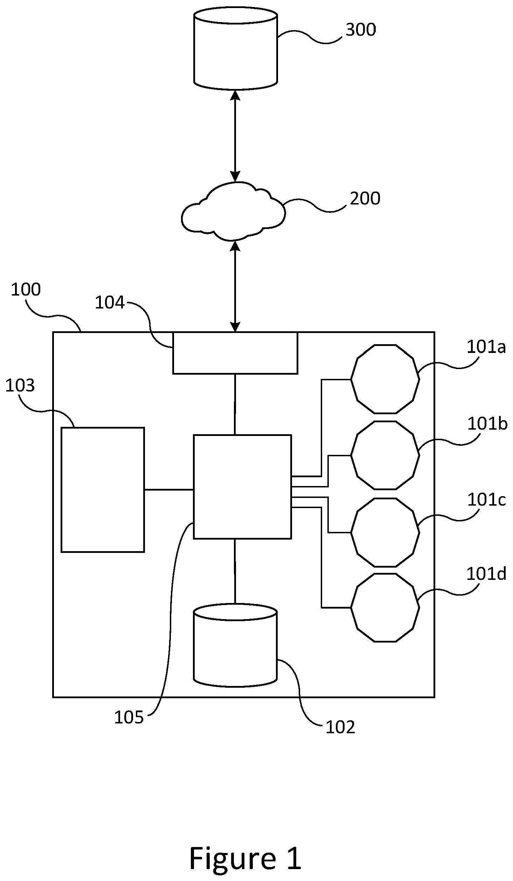

Figure 1 shows schematically an example of an electronic device 100 in accordance with examples described herein. Also shown in Figure 1 is a network 200 and a data storage 300 external from the electronic device 100, referred to herein as "external storage". The external storage 300 represents one or more storage locations which are accessible by the electronic device 100 via the network 200. The network 200 may be a local or wide-area network such as, for example, the Internet.

The electronic device 100 may be, for example, a smartphone, a laptop or other portable computer, etc. The electronic device 100 comprises a plurality of cameras 101, a data storage 102 (referred to herein as "internal storage"), a user interface 103, a communications interface 104, and a controller 105. The controller 105 is operatively coupled to the plurality of cameras 101, the internal storage 102, the user interface 103, and the communications interface 104. The controller 105 may be implemented using one or more processors.

The user interface 103 may comprise, for example, one or more of a display, a microphone, a computer mouse, a touchscreen, an API, etc. In operation, the user interface 103 allows a user to provide user input to the controller 105 of the electronic device 100. The user interface 103 may also allow the user to receive information from the electronic device 100. In other examples, separate user interfaces may be provided for input and output of information from the electronic device 100.

The communications interface 104 may comprise one or more of a wired communications interface (e.g. an Ethernet interface) or wireless communications interface (e.g. a WiFi interface). In operation, the communications interface 104 allows the controller 105 of the electronic device 100 to send data to the external storage 300. The communications interface 104 may also allow the controller 105 to receive data from the external storage 300. In other examples, separate communications interfaces may be provided for sending and receiving data from the external storage 300.

The cameras 101 are generally mounted by or within a housing of the electronic device 100 such that they each have a similar field of view (e.g., the cameras 101 may point in the same direction). However, the actual images which would be captured by the cameras 101 at any given time may differ slightly. This can be due to a variety of factors, including one or more different hardware properties of the cameras 101, one or more different hardware settings of the cameras 101, and/or one or more different software settings of the cameras 101, and the fact that the cameras 101 are at different locations on the electronic device 100 and so will have a slightly different view of any scene.

Put differently, even though each camera 101 captures an image of substantially the same scene (as the cameras 101 all view substantially the same thing), the cameras 101 may be of different types and/or have different settings at the time of image capture and have a different view, and this leads to the images being slightly different from one another.

Examples of different hardware properties (hardware capability) include: sensor resolution, maximum aperture (aka "lens speed"), and minimum focus distance. Examples of different hardware and software settings include: shutter speed, f-stop, ISO, focal length, image format, saturation, contrast, gamma, supported colour space, picture enhancement capabilities (e.g. HDR), exposure time, and flash availability (i.e. whether or not flash was used when capturing the image).

In the example of Figure 1, the electronic device 100 comprises four cameras 101a-d. However, it is appreciated that in other examples the electronic device 100 may comprises two cameras, three cameras, or five or more cameras. For ease of explanation, it is assumed that the first camera 101a is a 12MP ultra-wide camera, the second camera 101b is a 108MP wide camera, the third camera 101c is a 10x 10MP telephoto camera, and the fourth camera 101d is a 3x 10MP telephoto camera.

When capturing an image of a scene, the most appropriate or "best" of these cameras 101 depends on many factors, including, e.g., the distance to an object of interest within the scene, the size of the object of interest, the current lighting characteristics, motion within the captured image, etc. For example, the third camera 101c (the 10x 10MP telephoto camera) is better suited for capturing an image of a distant object than, say, the first camera 101a (the 12MP ultra-wide camera). As another example, the fourth camera 101d (the 3x 10MP telephoto camera) may have a higher shutter speed setting at the time of image capture than the third camera 101c (the 10x 10MP telephoto camera), and therefore the fourth camera 101d is better suited for capturing an image of a fast-moving object within the scene than the third camera 101c.

The user is able to specify which camera 101 to use to capture an image. A problem arises, however, because the user may not know which camera 101 is most appropriate. Even if the user does know which camera 101 he or she wants to use, the user may not have time to change which camera is selected. Moreover, the user may only realise at a later point in time (after the image has been captured) that a different camera 101 would have been preferable than the one that they did select. Examples described herein address these and other problems.

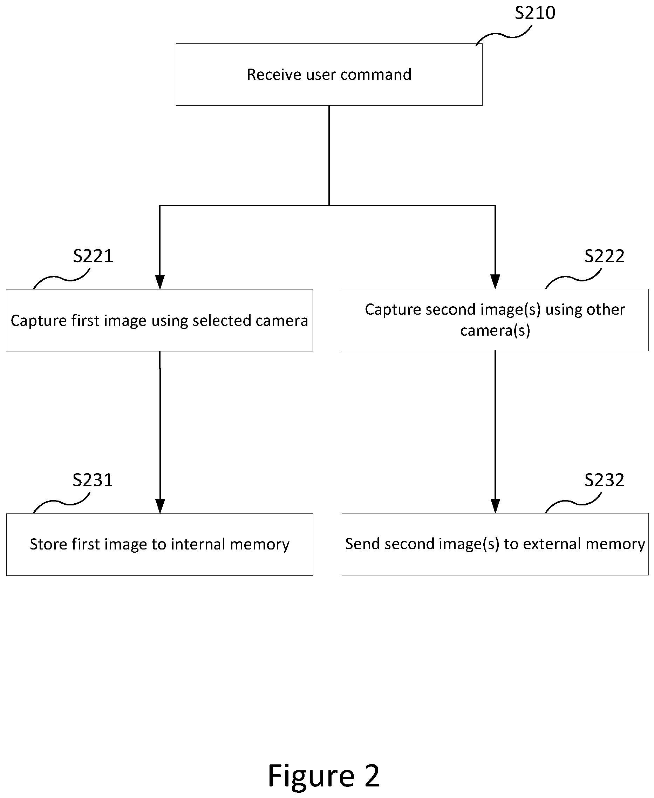

Figure 2 shows a flow chart of an example of a first method performed by the controller 105 of the electronic device 100.

At S210, the controller 105 receives, via the user interface 103, a user command to capture an image using a selected one of the plurality of cameras 101a.

The selected camera 101a may be specified explicitly by the user command, i.e. the user command may include an indication of which camera to use. Alternatively, the selected camera 101a may be specified implicitly by the user command, e.g. the selected camera 101a may be a default camera, or a most recently-used camera.

In response to the user command, the controller 105 does two things: at S221 the controller 105 causes the selected camera 101a to capture a first image; and at S222 the controller 105 causes at least one other, non-selected camera 101b-d to capture a respective second image. **In** other words, not only does the selected camera 101a capture an image (as requested by the user), one or more other cameras 101b-d also capture images.

The decision of which one or more of the other, non-selected cameras 101b-d to use to capture second image(s) at S222 may be made based on a variety of factors. **In** a simple case, all of the other, non-selected cameras 101b-d may be used by default. Other examples are given later below.

Once the first image has been captured, at S231 the controller 105 causes the first image to be stored to the internal storage 102. From the internal storage 102, the first image is viewable by the user in a photo-viewing application on the electronic device 100 (commonly referred to as a "gallery").

Once the at least one second image has been captured, at S232, the controller 105 sends the second image(s) to the external storage 300 via the communications interface 104, to cause the at least one second image to by stored in the external storage 300.

The capture S221 and storage S231 of the first image represents the "normal" behaviour of the electronic device 100 which the user expects in response to their command. The capture S222 and storage S232 of the second image(s) represents additional actions performed "in the background". The fact that these one or more other images have been captured and stored (remotely) means that they are accessible by the user at a later point in time. As such, the problem of a user having specified the "wrong" or not best or most optimal camera at the time of image capture is solved. Moreover, by storing the other images in the external storage 300, rather than the internal storage 102, consumption of the internal storage 102 of the electronic device 100 is reduced.

At a later point in time, the electronic device 100 may inform the user that the at least one second image is available. Specifically, the controller 105 may cause a notification to be presented to the user via the user interface 103 informing the user of the existence of the at least one second image. The notification may be presented to the user in response to the controller 105 receiving user input relating to the first image (e.g. in response to the user navigating to the first image in a gallery application on the electronic device 100). In other words, if the user interacts with the first image, then the controller 105 may inform the user of the availability of one or more alternative versions of that image (the at least one second image).

In order to identify the second image(s) from the first image, the controller 105 may store metadata associating the first image with the at least one second image. The metadata may be stored in the external storage 300, in the internal storage 102, or elsewhere. An advantage of storing the metadata in the internal storage 102 is that the controller 105 itself can locally determine that at least one second image associated with the first image exists in the external storage 300. However, it is not excluded that the metadata is stored elsewhere, e.g. the external storage 300 or another storage. Alternatively or additionally, image recognition may be used to identify that a second image corresponds to the first image, in which case no metadata may be required.

In some examples, the notification is a simple (e.g. text) notification. In other examples, the controller 105 may obtain the available second image(s) from the external storage 300 and the images themselves may comprise part of the notification (i.e. the user may be presented with the available second image(s) when they interact with the first image).

The notification may request user input allowing the user to select one or more of the second images. In response, the controller 105 may store the selected one or more of the second images to the internal storage 102. Optionally, at this point, the first image may be automatically deleted from the internal storage 102.

In more sophisticated examples, the controller 105 may make a determination as to whether to inform the user of the existence of the at least one second image and, if there is more than one available, which one. As will now be described, this involves analysing the user input to infer a desirable image property, and determining whether any of the available second images have that desirable image property.

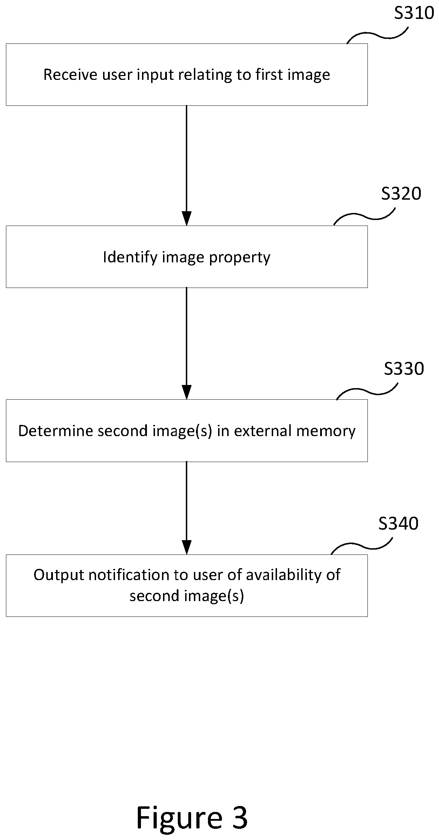

Figure 3 shows a flow chart of an example of a second method performed by the controller 105 of the electronic device 100. The second method is performed after the first method described above has been performed. That is, the second method is performed once the first image has been stored to the internal storage 102 and the one or more second images stored to the external storage 300

At S310, receives user input relating to the first image. The user input comprises one or more of: a zoom-in action on the first image; a crop action on the first image; a zoom-out action on the first image; an instruction to use the first image in an application, etc. Examples of such applications include social media applications and printer applications.

In response, at S320, the controller 105 identifies an image property based on the user input relating to the first image. Put generally, the controller 105 may infer what the user is trying to achieve based on the user input, and therefore identify a particular image property which is desirable or important to the user. For example, if the user input comprises a zoom-in action on the first image, then resolution may be identified as the image property of interest. As another example, if the user input comprises a crop action on the first image, then resolution may be identified as the image property of interest. As yet another example, if the user input comprises a zoom-out action on the first image, then field of view may be identified as the image property of interest. In further examples, if the user input comprises an instruction to use the first image in an application having a predefined image requirement, then that predefined image requirement may be identified as the image property of interest. Examples of such applications include social media applications and printer applications, as both of these can specify various image requirements.

In example, a threshold may be applied to the user input received at S310 such that the controller 105 only acts on user input exceeding the threshold (e.g. the user zooming-in beyond a threshold amount, cropping the first image to a portion smaller than a threshold portion, zooming-out beyond a threshold amount, etc.).

At S330, the controller 105 determines one or more of the second images from the second images stored in the external storage 300. This is done based on the identified image property. Specifically, given the identified image property, the controller 105 determines whether any of the second images have an improved value for that image property (e.g. if the image property is resolution, an improved value would be a higher resolution; if the image property is field of view, an improved value would be a larger field of view; if the image property is a predefined image requirement, an improved value would be meeting that predefined image requirement).

In response to determining the one or more second images, at S340, the controller 105 presents a notification via the user interface 103 informing the user that the determined one or more of the second images are available. Unlike the earlier, simpler, example, the notification specifically indicates the one or more second images which have been determined at S330 (rather than simply informing the user that there are alternative images).

Note that if two or more second images have an improved value for the identified image property, then the controller 105 may notify the user of the existence of all of these second images. In other examples, may only notify the user of the existence of the second image having the most improved value for the identified image property. Alternatively or additionally, the controller 105 may apply a threshold to the image property and only inform the user of any second images having a value for the image property above the threshold.

In examples, the controller 105 may apply an image size threshold to the second images corresponding to an available amount of storage space in the internal storage 102. The controller 105 may then only suggest second image(s) to the user have a size less than the threshold image size.

In any event, the controller 105 may obtain the determined second image(s) from the external storage 300 for viewing by the user on the user interface 103, the determined second images themselves comprising part of the notification. The user may then select one or more of the second images to store to the internal storage 102. At this point, the first image may optionally be automatically deleted from the internal storage 102.

In examples, the controller 105 may identify whether user input relating to the first image has been received during a predetermined period of time (e.g. a number of hours, days, weeks, etc.) since the at least one second image was stored to the external storage 300. If no user input relating to the first image has been received during said predetermined period of time, the controller 105 may cause the at least one second image to be deleted from the external storage 300. In examples, the controller 105 may only cause the second image(s) to be deleted if no substantive user input relating to the first image (e.g. editing the first image) has been received during the predetermined period of time. That is, the controller 105 ignores minor user input such as the user merely navigating to the first image and/or viewing it in the gallery.

As mentioned earlier above, the decision of which other, non-selected cameras 101b-d to use to capture the second image(s) at S222 can be based on a variety of factors. For example, the user may specify a particular one or more of the cameras 101 to use to capture the second image(s). Alternatively or additionally, the controller 105 may automatically reduce the number of other, non-selected cameras 101b-d which are used based on an amount of available storage space in the external storage 300. That is, if the user's free space availability in external storage 300 becomes less than a threshold level, then the controller 105 might not capture a second image using one or more of the other cameras 101b-d. The "deselection" of the other cameras 101b-d may be performed in order of decreasing image size (e.g. an ultra-wide camera option might be ignored first).

In examples, the controller 105 may automatically apply the same or similar settings (both hardware and software) to the other cameras 101b-d as are applied to the selected camera 101a for capturing the images. For example, if the user command is to capture a black and white image using the first camera 101a, then the controller 105 may automatically cause the second images to also be captured in black and white.

In examples, the controller 105 may identify the user's most-frequently used settings (both hardware and software) when capturing an image. In such cases, the controller 105 may automatically apply these settings to the other cameras 101b-d when capturing the second images.

The following are example use cases to demonstrate the benefits of some examples of the present disclosure.

In a first use case example, the user visits the first image in a gallery application and tries to perform a zoom-in action on the first image (e.g. by double-tapping or using a two-finger gesture on the screen). In response, the controller 105 checks if the zoom-in exceeds a threshold level (which could be set by the manufacturer depending on camera's quality and some experimental results in research and development testing stages of mobile device) and determines that the first photo, taken by the fourth camera 101d, is less detailed (lower quality or resolution) compared with the photo taken with the third camera 101c. Hence, the second photo taken by the third camera 101c provides a better image for the user in the sense that more detail is present when zoomed-in. Accordingly, the user interface 103 will show a dialog and ask for the user's consent to download the second photo.

In a second use case example, the user visits the first image in a gallery application and tries to perform a zoom-out action on the first image (e.g by using a two-finger gesture on the screen). In response, the electronic device 100 asks her consent to download e.g. a photo taken by the first camera 101a, as this photo provides has a wider angle scene when compared to the first image taken by the third camera 101c.

In a third use case example, the user visits the first image in a gallery application and tries to perform a cutting or cropping action on the first image. Here again a threshold level may be set to determine if the cropped first photo or one of the second photos in the external storage 300 provides the better image (higher resolution). Accordingly, the electronic device 100 will propose downloading the second image stored or not.

In another example, the user attempting to use the first image in a particular software application may trigger the controller 105 identifying and notifying the user of one or more of the second image(s). The following will be described with reference to a social media application, but it is appreciate that similar considerations apply in relation to other applications such as printer software application etc.

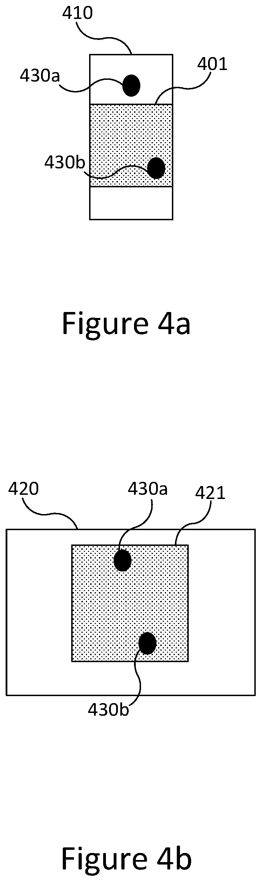

Some social media applications ("platforms") use special photo sizes which means that the user needs to crop their photo (the first image) before uploading if it does not already meet the social media application's requirements. However, cropping applied directly to the first image might not achieve satisfactory results, as will now be described with reference to Figures 4a and 4b. In this example, the application specifies a requirement that the image is a square image (i.e. has a 1:1 aspect ratio).

Figure 4a shows the user attempting to crop the first image 410 on the user interface 103. There are two objects of interest 430a, 430b in the first image 410 which the user wants to include in the cropped area 401. However, the application specifies that the crop area must be square. This means that it is not possible in this example to fit both the first object of interest 430a and second object of interest 430b into the crop area at the same time. As shown in Figure 4a, the second object of interest 430b is included in the crop area, but the first object of interest 430a is not. It is not possible to increase the size of the crop area to also include the first object of interest 430a because the crop area already covers the entire horizontal width of the first image.

In this particular scenario, the controller 105 would suggest a second image which is a wide-angle version of the first image. Figure 4b shows the user attempting to crop the second image 420. The second image 420 corresponds to the first image 410 at least in that the two objects of interest 430a, 430b are also present in the second image 420 location in at least substantially the same or corresponding locations within the second image 420. In other words, the second image 420 is a wide-angle version of the first image 410. As shown in Figure 4b, unlike the first image 410, it is possible to crop the second image 420 in a 1:1 aspect ratio in such a manner that both objects of interest 430a, 430b are included in the cropped area.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory (including for example a solid-state drive or SSD).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. The scope of protection is defined in the claims.

## Claims

1. A method carried out by an electronic device (100) which comprises a plurality of cameras (101), the method comprising:
receiving (S210), at the electronic device (100), a user command to capture an image using a selected one of the plurality of cameras (101a);
in response to receiving said user command, capturing (S221) a first image using the selected camera (101a) and capturing (S222) at least one second image using at least one other, non-selected, camera (101b, 101c, 101d);
storing (S231) the first image to a data storage (102) internal to the electronic device (100);
sending (S232) the at least one second image to a data storage (300) external of the electronic device (100) for storage at said external storage (300);
receiving (S310) user input relating to the first image, the user input being selected from: a zoom-in action on the first image; a crop action on the first image; a zoom-out action on the first image; and an instruction to use the first image in an application;
in response to receiving said user input relating to the first image, outputting (S340) a notification to the user that the at least one second image is available;
obtaining one or more of said second images from the external storage (300);
receiving user input selecting one of said second images; and
storing the selected second image in the internal storage (102).

2. A method according to claim 1, wherein the method comprises:
identifying (S320) an image property based on the user input relating to the first image;
determining (S330) a second image of the at least one second images stored in the external storage (300) having an improved value for the identified image property relative to the first image;
wherein said notification to the user notifies the user that the determined second image is available.

3. A method according to claim 1, wherein said user input comprises one or more of a zoom-in action on the first image and a crop action on the first image, said identified image property being one or more of an image resolution and an image sharpness; and wherein the second image is determined based on the second image having one or more of: a higher resolution than the first image; and a greater sharpness than the first image.

4. A method according to claim 3, comprising identifying a portion of the first image based on the zoom-in or crop action, said identified image property being one or more of an image resolution within said portion and an image sharpness within said portion; and wherein the second image is determined based on the second image having one or more of: a higher resolution in a portion of the second image corresponding to the identified portion of the first image and a greater sharpness in the portion of the second image corresponding to the identified portion of the first image.

5. A method according to any of claims 1 to 4, wherein said user input comprises a zoom-out action on the first image, said identified image property being a field of view; and wherein the second image is determined based on the second image having a wider field of view than the first image.

6. A method according to any of claims 1 to 5, wherein said user input comprises an instruction to use the first image in an application having a predefined image requirement, said identified image property being the predefined image requirement; and wherein the second image is determined based on the second image meeting said predefined image requirement.

7. A method according to any of claims 1 to 6, comprising:
obtaining one or more of said second images from the external storage (300);
receiving user input selecting one of said second images; and
storing the selected second image in the internal storage (102).

8. A method according to claim 7, comprising deleting the first image from the internal storage (102).

9. A method according to any of claims 1 to 8, comprising:
identifying whether user input relating to the first image has been received at the electronic device (100) during a predetermined period of time since the at least one second image was stored to the external storage (300); and
in response to identifying that no user input relating to the first image has been received at the electronic device (100) during said predetermined period of time, causing the at least one second image to be deleted from the external storage (300).

10. An electronic device (100) comprising:
an internal data storage (102);
a plurality of cameras (101);
a user interface (103) for receiving a user command to capture an image using a selected one of the plurality of cameras (101a);
a controller (105) configured to:
in response to receiving (S210) said user command via the user interface (103), cause (S221) the selected camera (101a) to capture a first image and cause (S222) at least one other, non-selected, camera (101b, 101c) to capture at least one second image;
store (S231) the first image to the internal storage (102); and
send (S232) the at least one second image to a data storage (300) external of the electronic device (100) for storage at said external storage (300)
receive (S310) user input relating to the first image, the user input being selected from: a zoom-in action on the first image; a crop action on the first image; a zoom-out action on the first image; and an instruction to use the first image in an application;
identify (S320) an image property based on the user input relating to the first image;
determine (S330) a second image of the at least one second images stored in the external storage (300) having an improved value for the identified image property relative to the first image; and
output (S340) a notification to the user that the determined second image is available.

11. An electronic device according to claim 10, wherein the plurality of cameras (101) each have at least one different hardware property selected from: sensor resolution, maximum aperture, and minimum focus distance.

12. An electronic device according to claim 10 or claim 11, wherein the plurality of cameras (101) each have at least one different setting at the time of receipt of the user command selected from: shutter speed, f-stop, ISO, focal length, image format, saturation, contrast, gamma, supported colour space, picture enhancement capabilities, exposure time, and flash availability.

13. A computer program comprising instructions configured so as when executed by one or more processing units to perform the method of any of claims 1 to 9.

## Patentansprüche

1. Ein Verfahren, das von einem elektronischen Gerät (100) durchgeführt wird, welches eine Vielzahl von Kameras (101) umfasst, wobei das Verfahren umfasst:
Empfangen (S210) eines Benutzerbefehls zum Aufnehmen eines Bildes mit einer ausgewählten Kamera (101a) der Vielzahl von Kameras (101) am elektronischen Gerät (100);
In Reaktion auf das Empfangen des Benutzerbefehls Aufnehmen (S221) eines ersten Bildes mit der ausgewählten Kamera (101a) und Aufnehmen (S222) mindestens eines zweiten Bildes mit mindestens einer anderen, nicht ausgewählten Kamera (101b, 101c, 101d);
Speichern (S231) des ersten Bildes in einem Datenspeicher (102) innerhalb des elektronischen Geräts (100);
Senden (S232) des mindestens einen zweiten Bildes an einen Datenspeicher (300) außerhalb des elektronischen Geräts (100) zur Speicherung in dem externen Speicher (300);
Empfangen (S310) einer Benutzereingabe in Bezug auf das erste Bild, wobei die Benutzereingabe ausgewählt ist aus: einer Vergrößerungsaktion auf das erste Bild; einer Zuschneideaktion auf das erste Bild; einer Verkleinerungsaktion auf das erste Bild; und einer Anweisung, das erste Bild in einer Anwendung zu verwenden;
In Reaktion auf das Empfangen der Benutzereingabe in Bezug auf das erste Bild Ausgeben (S340) einer Benachrichtigung an den Benutzer, dass das mindestens eine zweite Bild verfügbar ist; Abrufen eines oder mehrerer der zweiten Bilder aus dem externen Speicher (300); Empfangen einer Benutzereingabe zur Auswahl eines der zweiten Bilder; und Speichern des ausgewählten zweiten Bildes im internen Speicher (102).

2. Ein Verfahren nach Anspruch 1, wobei das Verfahren umfasst: Identifizieren (S320) einer Bildeigenschaft basierend auf der Benutzereingabe in Bezug auf das erste Bild; Bestimmen (S330) eines zweiten Bildes der mindestens einen zweiten Bilder, die im externen Speicher (300) gespeichert sind, mit einem verbesserten Wert für die identifizierte Bildeigenschaft im Vergleich zum ersten Bild; wobei die Benachrichtigung an den Benutzer den Benutzer darüber informiert, dass das bestimmte zweite Bild verfügbar ist.

3. Ein Verfahren nach Anspruch 1, wobei die Benutzereingabe eine oder mehrere der folgenden umfasst: eine Vergrößerungsaktion auf das erste Bild und eine Zuschneideaktion auf das erste Bild, wobei die identifizierte Bildeigenschaft eine oder mehrere der folgenden ist: Bildauflösung und Bildschärfe; und wobei das zweite Bild basierend auf dem zweiten Bild bestimmt wird, das eine oder mehrere der folgenden aufweist: eine höhere Auflösung als das erste Bild; und eine größere Schärfe als das erste Bild.

4. Ein Verfahren nach Anspruch 3, umfassend das Identifizieren eines Teils des ersten Bildes basierend auf der Vergrößerungs- oder Zuschneideaktion, wobei die identifizierte Bildeigenschaft eine oder mehrere der folgenden ist: Bildauflösung innerhalb des Teils und Bildschärfe innerhalb des Teils; und wobei das zweite Bild basierend auf dem zweiten Bild bestimmt wird, das eine oder mehrere der folgenden aufweist: eine höhere Auflösung in einem Teil des zweiten Bildes, der dem identifizierten Teil des ersten Bildes entspricht, und eine größere Schärfe in dem Teil des zweiten Bildes, der dem identifizierten Teil des ersten Bildes entspricht.

5. Ein Verfahren nach einem der Ansprüche 1 bis 4, wobei die Benutzereingabe eine Verkleinerungsaktion auf das erste Bild umfasst, wobei die identifizierte Bildeigenschaft ein Sichtfeld ist; und wobei das zweite Bild basierend auf dem zweiten Bild bestimmt wird, das ein breiteres Sichtfeld als das erste Bild aufweist.

6. Ein Verfahren nach einem der Ansprüche 1 bis 5, wobei die Benutzereingabe eine Anweisung umfasst, das erste Bild in einer Anwendung mit einer vordefinierten Bildanforderung zu verwenden, wobei die identifizierte Bildeigenschaft die vordefinierte Bildanforderung ist; und wobei das zweite Bild basierend auf dem zweiten Bild bestimmt wird, das die vordefinierte Bildanforderung erfüllt.

7. Ein Verfahren nach einem der Ansprüche 1 bis 6, umfassend: Abrufen eines oder mehrerer der zweiten Bilder aus dem externen Speicher (300); Empfangen einer Benutzereingabe zur Auswahl eines der zweiten Bilder; und Speichern des ausgewählten zweiten Bildes im internen Speicher (102).

8. Ein Verfahren nach Anspruch 7, umfassend das Löschen des ersten Bildes aus dem internen Speicher (102).

9. Ein Verfahren nach einem der Ansprüche 1 bis 8, umfassend: Identifizieren, ob eine Benutzereingabe in Bezug auf das erste Bild innerhalb eines vorbestimmten Zeitraums seit dem Speichern des mindestens einen zweiten Bildes im externen Speicher (300) am elektronischen Gerät (100) empfangen wurde; und In Reaktion auf das Identifizieren, dass keine Benutzereingabe in Bezug auf das erste Bild innerhalb des vorbestimmten Zeitraums am elektronischen Gerät (100) empfangen wurde, Veranlassen des Löschens des mindestens einen zweiten Bildes aus dem externen Speicher (300).

10. Ein elektronisches Gerät (100), umfassend:
einen internen Datenspeicher (102);
eine Vielzahl von Kameras (101);
eine Benutzeroberfläche (103) zum Empfangen eines Benutzerbefehls zum Aufnehmen eines Bildes mit einer ausgewählten Kamera (101a) der Vielzahl von Kameras (101); einen Steuergerät (105), konfiguriert um:
In Reaktion auf das Empfangen (S210) des Benutzerbefehls über die Benutzeroberfläche (103) veranlassen der ausgewählten Kamera (101a), ein erstes Bild aufzunehmen und mindestens eine andere, nicht ausgewählte Kamera (101b, 101c) zu veranlassen, mindestens ein zweites Bild aufzunehmen;
Speichern (S231) des ersten Bildes im internen Speicher (102); und
Senden (S232) des mindestens einen zweiten Bildes an einen Datenspeicher (300) außerhalb des elektronischen Geräts (100) zur Speicherung in dem externen Speicher (300);
Empfangen (S310) einer Benutzereingabe in Bezug auf das erste Bild, wobei die Benutzereingabe ausgewählt ist aus: einer Vergrößerungsaktion auf das erste Bild; einer Zuschneideaktion auf das erste Bild; einer Verkleinerungsaktion auf das erste Bild; und einer Anweisung, das erste Bild in einer Anwendung zu verwenden;
Identifizieren (S320) einer Bildeigenschaft basierend auf der Benutzereingabe in Bezug auf das erste Bild;
Bestimmen (S330) eines zweiten Bildes der mindestens einen zweiten Bilder, die im externen Speicher (300) gespeichert sind, mit einem verbesserten Wert für die identifizierte Bildeigenschaft im Vergleich zum ersten Bild; und
Ausgeben (S340) einer Benachrichtigung an den Benutzer, dass das bestimmte zweite Bild verfügbar ist.

11. Ein elektronisches Gerät nach Anspruch 10, wobei die Vielzahl von Kameras (101) jeweils mindestens eine unterschiedliche Hardwareeigenschaft aufweisen, ausgewählt aus: Sensorauflösung, maximale Blendenöffnung und minimale Fokusdistanz.

12. Ein elektronisches Gerät nach Anspruch 10 oder Anspruch 11, wobei die Vielzahl von Kameras (101) jeweils mindestens eine unterschiedliche Einstellung zum Zeitpunkt des Empfangs des Benutzerbefehls aufweisen, ausgewählt aus: Verschlusszeit, Blendenwert, ISO, Brennweite, Bildformat, Sättigung, Kontrast, Gamma, unterstützter Farbraum, Bildverbesserungsfähigkeiten, Belichtungszeit und Blitzverfügbarkeit.

13. Ein Computerprogramm, umfassend Anweisungen, die so konfiguriert sind, dass sie bei Ausführung durch eine oder mehrere Verarbeitungseinheiten das Verfahren nach einem der Ansprüche 1 bis 9 durchführen.

## Revendications

1. Procédé effectué par un dispositif électronique (100) qui comprend une pluralité de caméras (101), le procédé consistant à :
recevoir (S210), au niveau du dispositif électronique (100), une commande d'utilisateur pour capturer une image en utilisant une caméra sélectionnée parmi la pluralité de caméras (101a) ;
en réponse à la réception de ladite commande d'utilisateur, capturer (S221) une première image en utilisant la caméra sélectionnée (101a) et capturer (S222) au moins une deuxième image en utilisant au moins une autre caméra non sélectionnée (101b, 101c, 101d) ;
stocker (S231) la première image dans un stockage de données (102) interne au dispositif électronique (100) ;
envoyer (S232) ladite au moins une deuxième image à un stockage de données (300) externe au dispositif électronique (100) à des fins de stockage dans ledit stockage externe (300) ;
recevoir (S310) une entrée d'utilisateur relative à la première image, l'entrée d'utilisateur étant sélectionnée parmi ce qui suit : une action de zoom avant sur la première image ; une action de recadrage sur la première image ; une action de zoom arrière sur la première image ; et une instruction d'utiliser la première image dans une application ;
en réponse à la réception de ladite entrée d'utilisateur relative à la première image, délivrer en sortie (S340) une notification à l'utilisateur indiquant que ladite au moins deuxième image est disponible ;
obtenir une ou plusieurs desdites deuxièmes images provenant du stockage externe (300) ;
recevoir une entrée d'utilisateur sélectionnant l'une desdites deuxièmes images ; et
stocker la deuxième image sélectionnée dans le stockage interne (102).

2. Procédé selon la revendication 1, dans lequel le procédé consiste à :
identifier (S320) une propriété d'image sur la base de l'entrée d'utilisateur relative à la première image ;
déterminer (S330) une deuxième image parmi ladite au moins une deuxième image stockée dans le stockage externe (300), ayant une valeur améliorée de la propriété d'image identifiée par rapport à la première image,
dans lequel ladite notification à l'utilisateur notifie l'utilisateur que la deuxième image déterminée est disponible.

3. Procédé selon la revendication 1, dans lequel ladite entrée d'utilisateur comprend l'une ou plusieurs parmi une action de zoom avant sur la première image et une action de recadrage sur la première image, ladite propriété d'image identifiée étant l'une ou plusieurs parmi une résolution d'image et une netteté d'image ; et dans lequel la deuxième image est déterminée sur la base de la deuxième image ayant l'une ou plusieurs parmi une résolution supérieure à celle de la première image et une netteté supérieure à celle de la première image.

4. Procédé selon la revendication 3, consistant à identifier une portion de la première image sur la base de l'action de zoom avant ou de recadrage, ladite propriété d'image identifiée étant l'une ou plusieurs parmi une résolution d'image dans ladite portion et une netteté d'image dans ladite portion ; et dans lequel la deuxième image est déterminée sur la base de la deuxième image ayant l'une ou plusieurs parmi une résolution supérieure dans une portion de la deuxième image correspondant à la portion identifiée de la première image et une netteté supérieure dans la portion de la deuxième image correspondant à la portion identifiée de la première image.

5. Procédé selon l'une quelconque des revendications 1 à 4, dans lequel ladite entrée d'utilisateur comprend une action de zoom arrière sur la première image, ladite propriété d'image identifiée étant un champ de vision ; et dans lequel la deuxième image est déterminée sur la base de la deuxième image ayant un champ de vision plus large que la première image.

6. Procédé selon l'une quelconque des revendications 1 à 5, dans lequel ladite entrée d'utilisateur comprend une instruction d'utiliser la première image dans une application ayant une exigence d'image prédéfinie, ladite propriété d'image identifiée étant l'exigence d'image prédéfinie ; et dans lequel la deuxième image est déterminée sur la base de la deuxième image répondant à ladite exigence d'image prédéfinie.

7. Procédé selon l'une quelconque des revendications 1 à 6, consistant à :
obtenir une ou plusieurs desdites deuxièmes images provenant du stockage externe (300) ;
recevoir une entrée d'utilisateur sélectionnant l'une desdites deuxièmes images ; et
stocker la deuxième image sélectionnée dans le stockage interne (102).

8. Procédé selon la revendication 7, consistant à supprimer la première image hors du stockage interne (102).

9. Procédé selon l'une quelconque des revendications 1 à 8, consistant à :
identifier si une entrée d'utilisateur relative à la première image a été reçue au niveau du dispositif électronique (100) pendant une période de temps prédéterminée depuis que ladite au moins une deuxième image a été stockée dans le stockage externe (300) ; et
en réponse à l'identification qu'aucune entrée d'utilisateur relative à la première image n'a été reçue au niveau du dispositif électronique (100) pendant ladite période de temps prédéterminée, provoquer la suppression de ladite au moins une deuxième image hors du stockage externe (300).

10. Dispositif électronique (100), comprenant :
un stockage de données interne (102) ;
une pluralité de caméras (101) ;
une interface d'utilisateur (103) servant à recevoir une commande d'utilisateur pour capturer une image en utilisant une caméra sélectionnée parmi la pluralité de caméras (101a) ;
un contrôleur (105) configuré pour :
en réponse à la réception (S210) de ladite commande d'utilisateur via l'interface d'utilisateur (103), provoquer (S221) la capture d'une première image par la caméra sélectionnée (101a) et provoquer (S222) la capture d'au moins une deuxième image par au moins une autre caméra non sélectionnée (101b, 101c) ;
stocker (S231) la première image dans le stockage interne (102) ;
envoyer (S232) ladite au moins une deuxième image à un stockage de données (300) externe au dispositif électronique (100) à des fins de stockage dans ledit stockage externe (300) ;
recevoir (S310) une entrée d'utilisateur relative à la première image, l'entrée d'utilisateur étant sélectionnée parmi ce qui suit : une action de zoom avant sur la première image ; une action de recadrage sur la première image ; une action de zoom arrière sur la première image ; et une instruction d'utiliser la première image dans une application ;
identifier (S320) une propriété d'image sur la base de l'entrée d'utilisateur relative à la première image ;
déterminer (S330) une deuxième image parmi ladite au moins une deuxième image stockée dans le stockage externe (300), ayant une valeur améliorée de la propriété d'image identifiée par rapport à la première image ; et
délivrer en sortie (S340) une notification à l'utilisateur indiquant que la deuxième image déterminée est disponible.

11. Dispositif électronique selon la revendication 10, dans lequel chacune de la pluralité de caméras (101) possède au moins une propriété matérielle différente qui est sélectionnée parmi ce qui suit : une résolution de capteur, une ouverture maximale et une distance minimale de mise au point.

12. Dispositif électronique selon la revendication 10 ou 11, dans lequel chacune de la pluralité de caméras (101) possède au moins un réglage différent, au moment de la réception de la commande d'utilisateur, qui est sélectionné parmi ce qui suit : la vitesse d'obturation, l'ouverture de diaphragme, l'ISO, la longueur focale, le format d'image, la saturation, le contraste, le gamma, l'espace colorimétrique pris en charge, les capacités d'amélioration de l'image, le temps d'exposition et la disponibilité du flash.

13. Programme informatique, comprenant des instructions configurées de sorte qu'une fois exécutées par une ou plusieurs unités de traitement, elles effectuent le procédé selon l'une quelconque des revendications 1 à 9.
